## Europäisches Patentamt
## European Patent Office
## Office européen des brevets

(19)

(11) Veröffentlichungsnummer: **0 038 406**
**A2**

(12) # EUROPÄISCHE PATENTANMELDUNG

(21) Anmeldenummer: **81101138.6**

(22) Anmeldetag: **18.02.81**

(51) Int. Cl.³: **G 03 B 27/52**
**G 03 B 21/12, G 03 B 17/24**

(30) Priorität: **20.02.80 DE 3006241**

(43) Veröffentlichungstag der Anmeldung:
**28.10.81 Patentblatt 81/43**

(84) Benannte Vertragsstaaten:
**CH FR GB LI SE**

(71) Anmelder: **AGFA-GEVAERT Aktiengesellschaft**
**Camera-Werk**
**Postfach**
**D-8000 München 90(DE)**

(72) Erfinder: **Stemme, Otto, Dr.**
**Heideckstrasse 29**
**D-8000 München 19(DE)**

(72) Erfinder: **Wagensonner, Eduard**
**Eichenstrasse 1**
**D-8011 Aschheim(DE)**

(72) Erfinder: **von Fischern, Bernhard**
**Zaunkönigstrasse 36**
**D-8012 Ottobrunn(DE)**

(54) **Vorrichtung zur Steuerung von Filmstreifen.**

(57) Zwei optoelektronische Abtaststufen einer Vorrichtung zur Steuerung von Filmstreifen sind in einem vorgegebenen Bildabstand voneinander angeordnet. Beide Abtaststufen sind mit je einer Steuer- und Auswerteschaltung verbunden. Die erste Stufe verringert die Drehzahl des Antriebs von einer hohen Drehzahl auf einen entsprechend niedrigeren Drehzahlwert. Die zweite Stufe setzt den Filmantrieb für eine vorgegebene Zeitspanne still. Eine Erkennungsschaltung nimmt die eine Rückumschaltung der Drehzahl auf den hohen Drehzahlwert dann vor, wenn bei einer nach der zweiten Abtaststufe befindlichen Markierung sich zwischen dieser und der ersten Abtaststufe keine weitere Markierung befindet.

./...

Fig.1

CAMERA-WERK MÜNCHEN
PATENTABTEILUNG

— 1 —

CW 2367.6 PP/MP

10-vf-ni

4626 A

## Vorrichtung zur Steuerung von Filmstreifen

Die Erfindung betrifft eine Vorrichtung zur Steuerung von
Filmstreifen mit auf diesem vorgesehenen Bildern, wobei bestimmten Bildern Markierungen auf dem Filmstreifen zugeordnet sind, durch die ein Antrieb für den Filmstreifen steuerbar ist.

Der Erfindung liegt die Aufgabe zugrunde, eine Vorrichtung
der eingangs genannten Art zu schaffen, die bei Filmstreifen
mit markierten Bildern kurze Suchzeiten und eine schonende
Behandlung des Filmes gewährleistet. Insbesondere sollen die
zwischen gekennzeichneten Filmbildern befindlichen ungekennzeichneten Filmbilder schnell transportiert werden. Dies ist
insbesondere dann von Bedeutung, wenn die gekennzeichneten
Filmbilder in einem Kopiergerät kopiert werden soll, um so
die jeweils gekennzeichneten Bilder schnell in die Kopierstellung zu bewegen.

CW 2367.6 PP/MP

Hierbei sollen die jeweils gekennzeichneten Filmbilder positionsrichtig in der Bildbühne gestoppt werden.

Gemäß der Erfindung wird dies dadurch erreicht, daß zwei optoelektronische Abtaststufen in einem vorgegebenen Bildabstand voneinander angeordnet sind, daß beide Abtaststufen mit je einer Steuer- und Auswerteschaltung verbunden sind, von denen die erste Stufe den Antrieb von einer hohen Drehzahl kontinuierlich oder in mindestens einer Stufe sprunghaft auf einen entsprechend niedrigeren Drehzahlwert verringert und von denen die zweite Stufe den Filmantrieb für eine vorgegebene Zeitspanne stillsetzt und daß eine Erkennungsschaltung vorgesehen ist, die eine Rückumschaltung der Drehzahl auf den hohen Drehzahlwert kontinuierlich oder stufenweise erst dann vornimmt, wenn bei einer an oder nach der zweiten Abtaststufe befindlichen Markierung sich zwischen dieser und der ersten Abtaststufe keine weitere Markierung befindet. In vorteilhafter Weise werden ohne Verwendung von Rutschkupplungen oder dergl. die bewegten und abzubremsenden Massen kontinuierlich oder stufenweise positionsgerecht zum Stillstand gebracht, ohne daß hierbei eine zu starke Beanspruchung des Filmes auftritt. Dies ist insbesondere dann von Bedeutung, wenn der Filmantrieb über eine sogenannte Zahntrommel oder ein Greifersystem in die Perforation des zu transportierenden Filmstreifens eingreift.

Gemäß weiterer Ausbildung weist die erste Steuer- und Abtaststufe einen Vorwärts-Rückwärts-Zähler auf, dessen Vorwärts-Zähleingang mit dem ersten optoelektronischen Abtaster und dessen Rückwärts-Zähleingang mit dem zweiten optoelektronischen Abtaster verbunden ist. Hierdurch ergibt sich der Vorteil, daß die Markierungen auf dem Filmstreifen zunächst nacheinander in den Zähler vorwärts eingezählt werden. Erreicht nun dieser Markierungsverband den zweiten optoelektronischen Wandler, so erfolgt in entsprechender Weise

0038406

CW 2367.6 PP/MP

eine Zurückzählung des Zählers. Hat die letzte Markierung
des Markierungsverbandes den zweiten optoelektronischen
Wandler erreicht, so ist der Zähler wieder auf den Ausgangswert, z. B. "0" zurückgezählt. Dieses Zählsignal "0" veranlaßt in vorteilhafter Weise eine Rückschaltung der Antriebsvorrichtung auf die ursprüngliche hohe Drehzahl. Das Erreichen des Ausgangszählerstandes ist kennzeichnend dafür, daß
sich zwischen dem ersten und dem zweiten optoelektronischen
Wandler kein markiertes Bild befindet.

Gemäß weiterer Ausbildung ist zwischen jedem der beiden optoelektronischen Abtaster und dem Vorwärts-Rückwärts-Zähler
jeweils eine Impulswandlerstufe vorgesehen.

In vorteilhafter Weise entspricht der Abstand zwischen den
beiden optoelektronischen Abtastern einer Anzahl von mindestens sechs Bildern.

Gemäß weiterer Ausgestaltung sind die Ausgänge des Zählers
mit einem ODER-Gatter verbunden, dessen Ausgang an den Eingang einer elektronischen Schaltvorrichtung angeschlossen
ist, durch das der Stromkreis des Antriebsmotors umschaltbar
ist.

In vorteilhafter Weise ist durch die steuerbare elektronische Schaltvorrichtung, vorzugsweise durch mindestens einen
Transistor, mindestens ein Widerstand ein- und ausschaltbar,
der mit weiteren Widerständen einen Spannungsteiler bildet,
welcher als Sollwertgeber mit einer Vergleichsschaltung verbunden ist, deren anderer Eingang mit einem aus Widerständen
und einem mit dem Antriebsmotor zusammenwirkenden Tachogenerator bestehenden Istwertgeber verbunden ist, wobei der Ausgang der Vergleichsschaltung an den Antriebsmotor-Stromkreis
angeschlossen ist.

Gemäß weiterer Ausgestaltung weist die zweite Steuer- und Auswerteschaltung einen im Antriebsmotorstromkreis vorgesehenen steuerbaren Schalter auf, der durch eine analoge oder digitale Zeitgliedstufe für eine vorgegebene Zeit gesperrt wird, wobei die Zeitgliedstufe durch einen Startimpuls wirksam geschaltet wird, der vom zweiten optoelektronischen Abtaster abgeleitet wird.

In vorteilhafter Weise ist die Zeitgliedstufe ein monostabiler Multivibrator oder ein Digitalzähler, der entweder nach einer lichtabhängigen oder nach einer voreinstellbaren Zeit in seinen Ausgangszustand zurückkehrt.

Gemäß weiterer Ausgestaltung ist vom Ausgang der Zeitgliedstufe eine Steuerverbindung zu einer Verzögerungsstufe vorgesehen, deren Ausgang mit dem ersten Eingang eines zweiten ODER-Gatters verbunden ist, dessen zweiter Eingang an den Ausgang des ersten ODER-Gatters des Zählers angeschlossen ist, wobei der Ausgang des zweiten ODER-Gatters mit der Basis des Steuertransistors verbunden ist.

Gemäß einer anderen Ausgestaltung sind drei Steuertransistoren vorgesehen, deren Kollektor-Emitter-Strecken in Reihe geschaltet sind und durch die nacheinander je ein Widerstand der Vergleichsschaltung ein- und ausschaltbar ist, wobei im Basisstromkreis des zweiten und dritten Transistors eine Verzögerungsstufe vorgesehen ist. Hierdurch wird in vorteilhafter Weise erreicht, daß einerseits eine stufenweise Veränderung der Antriebsmotor-Drehzahl in drei Stufen nacheinander erfolgt und daß nach erfolgter Filmstreifenstillsetzung der Antrieb nicht schlagartig seine hohe Drehzahl erreicht, sondern dies ebenfalls in drei Stufen erfolgt.

CW 2367.6 PP/MP

Im folgenden wird die Erfindung anhand zweier in den Figuren 1 bis 3 dargestellter Ausführungsbeispiele beschrieben. Es zeigen:

Figur 1 und 2    ein erstes Ausführungsbeispiel und

Figur 3    ein zweites Ausführungsbeispiel.

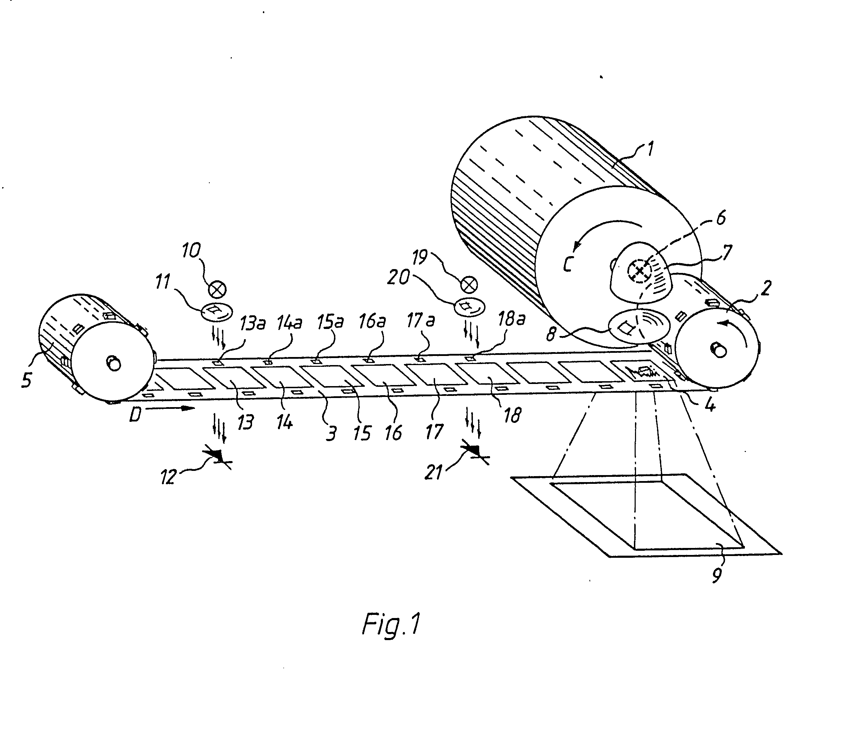

Gemäß Figur 1 ist mit 1 ein Gleichstrommotor bezeichnet, der mit einer Zahntrommel 2 verbunden ist. Die Zahntrommel 2 greift in Perforationslöcher eines Filmstreifens 3 ein, auf dem eine Vielzahl von Bildern 4 vorgesehen ist. Eine Abwickelzahntrommel ist mit 5 bezeichnet. Mit 6 ist eine Projektionslampe und mit 7 ein Reflektor bezeichnet. Eine Projektionsoptik 8 befindet sich zwischen der Projektionslampe 6 und dem Filmbild 4. Das Filmbild 4 wird auf einem Fotopapier 9 kopiert. Eine erste optoelektronische Abtastvorrichtung besteht aus einer Lampe 10, einer Optik 11 und einem fotoempfindlichen Empfänger 12. Im Abstand von sechs Bildern 13, 14, 15, 16, 17, 18 befindet sich eine zweite optoelektronische Abtastvorrichtung, bestehend aus einer Lampe 19, aus einer Optik 20 und aus einem fotoempfindlichen Empfänger 21.

Die Bilder 13 bis 18 weisen jeweils eine Markierung 13a, 14a, 15a, 16a, 17a und 18a auf.

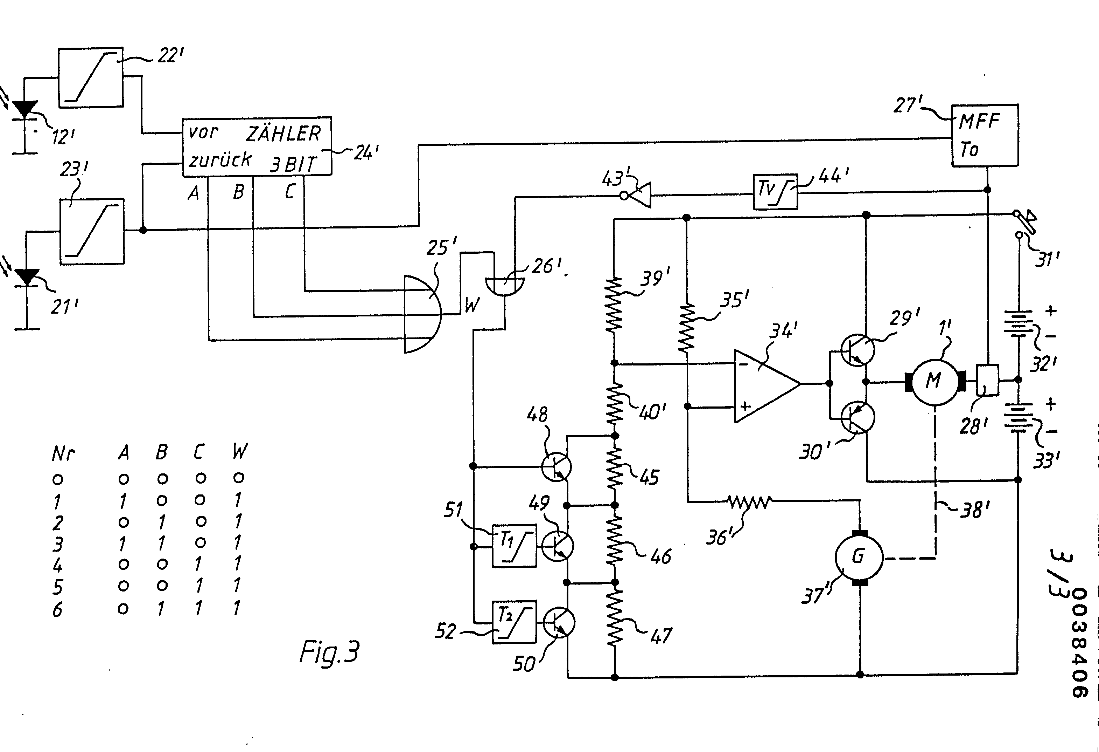

Gemäß Figur 3 ist als fotoempfindlicher Empfänger eine Siliciumdiode 12 vorgesehen, der eine Impulsformerstufe 22 nachgeschaltet ist.

Als Vorwärts-Rückwärts-Zähler kann z. B. der Zähler mit der Typenbezeichnung SN 74193 N verwendet werden, der "das TTL-Kochbuch" von Texas-Instruments Deutschland GmbH, Seite 149, beschrieben ist. Ein solcher Zähler ist in

CW 2367.6 PP/MP

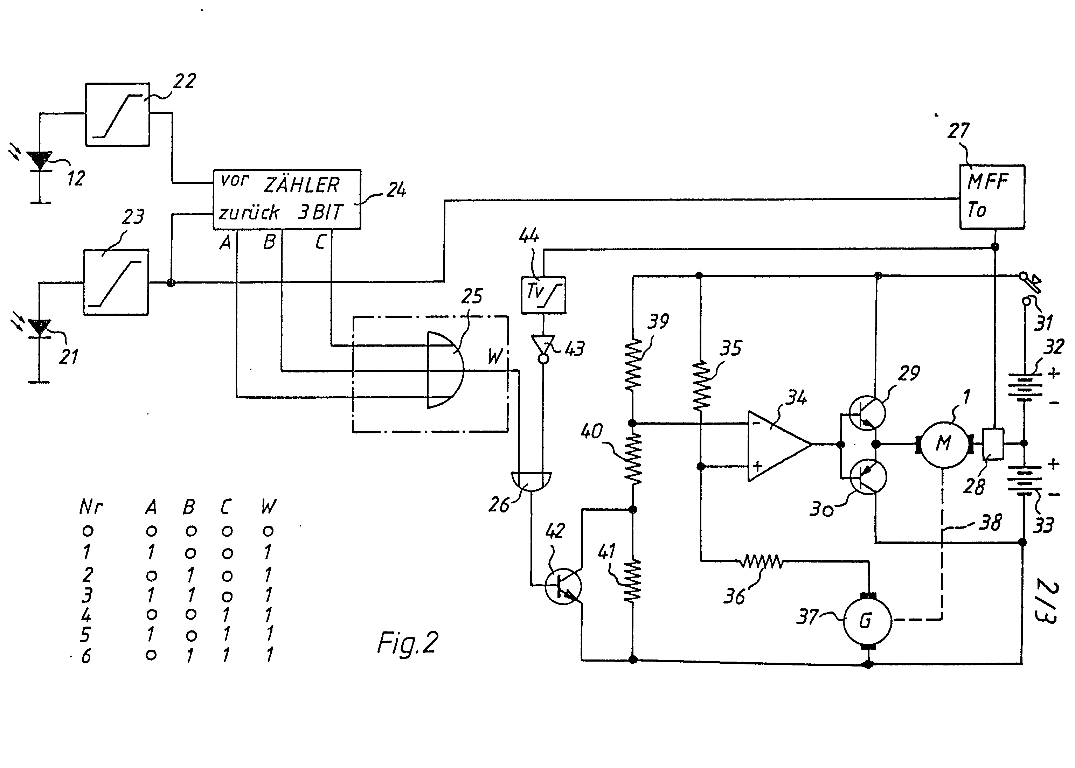

Figur 2 mit 24 bezeichnet. Der Ausgang der Impulsformerstufe 22 für die Siliciumfotodiode 12 der ersten optoelektronischen Abtastanordnung ist mit dem Vorwärts-Eingang des
Zählers 24 verbunden, während der Rückwärtszähleingang dieses Zählers 24 mit dem Ausgang der Impulsformerstufe 23 verbunden ist.

Die Ausgänge A, B und C dieses 3 Bit-Zählers 24 sind mit
einem ODER-Gatter 25 verbunden. Der Ausgang W des ODER-Gatters 25 führt zum ersten Eingang eines weiteren ODER-Gatters 26.

Der Ausgang der Impulsformerstufe 23 der Siliciumdiode 21
der zweiten optoelektronischen Abtastanordnung ist mit dem
Eingang eines monostabilen Multivibrators 27 verbunden, dessen Verzögerungs- bzw. Kippzeit bzw. Zeitkonstante gleich
$T_0$ ist. Das Ausgangspotential dieses monostabilen Multivibrators 27 ist im Ruhezustand gleich "1", während es in der
Kipp-Phase des monostabilen Multivibrators 27 gleich "O"
ist. Der Ausgang dieses monostabilen Multivibrators 27 ist
mit dem Eingang eines steuerbare elektronischen Schalters 28
verbunden, der im Ruhezustand durchgesteuert und während der
Kipp-Phase des monostabilen Multivibrators gesperrt ist.

Der elektronische Schalter 28 ist mit dem Gleichstrommotor 1
in Reihe geschaltet. Des weiteren ist der Gleichstrommotor 1
mit den Emittern zweiter Transistoren 29 und 30 verbunden.
Der Kollektor des Transistors 29 ist über einen Schalter 31
mit dem Pluspol einer Batterie 32 verbindbar, während der
Kollektor des Transistors 30 mit dem Minuspol einer weiteren
Batterie 33 verbunden ist.

Die gemeinsam miteinander verbundenen Basen der beiden Transistoren 29 und 30 sind mit dem Ausgang eines Operationsverstärkers 34 verbunden, dessen nichtinvertierender Eingang mit dem Abgriff eines Spannungsteilers verbunden ist, der aus zwei Widerständen 35 und 36 sowie aus einem Tachogenerator 39 besteht, der über eine feste Verbindung 38 mit dem Gleichstrommotor 1 verbunden ist.

Der invertierende Eingang des Operationsverstärkers weist eine Verbindung zu dem Abgriff eines Spannungsteilers auf, der aus Widerständen 39, 40 und 41 besteht. Der Widerstand 41 ist durch einen Schalttransistor 42 überbrückbar, dessen Basis mit dem Ausgang des ODER-Gatters 26 verbunden ist.

Der zweite Eingang des ODER-Gatters 26 ist über eine Inverterstufe 43 mit einer Verzögerungskippstufe 44 verbunden, dere Eingang mit dem Ausgang des monostabilen Multivibrators 27 verbunden ist. Die Verzögerungsschaltstufe 44 weist eingangsseitig und ausgangsseitig in der Ruhephase des monostabilen Multivibrators 27 das Potential "1" auf, während das Eingangs- und Ausgangspotential in der Kipp-Phase des monostabilen Multivibrators 27 das Potential"0" aufweist. Somit ist das Potential am zweiten Eingang des ODER-Gatters 26 in der Ruhephase des monostabilen Multivibrators 27 gleich "0", während es in der Kipp-Phase des monostabilen Multivibrators 27 gleich "1" ist. Jedoch ist zu beachten, daß der Potentialwechsel am zweiten Eingang des ODER-Gatters 26 um die Zeit $T_v$ verzögert gegenüber dem Potentialwechsel am Ausgang des monostabilen Multivibrators 27 erfolgt.

Die Funktionsweise ist nun folgende. Zu einem bestimmten Zeitpunkt wird der Betriebsschalter 31 geschlossen und somit die Schaltungsanordnung bestromt. Der Motor 1 wird eingeschaltet und erreicht nach einer bestimmten Zeitspanne seine Nenndrehzahl. Es wird angenommen, daß diese Drehzahl eine Filmstreifengeschwindigkeit von ca. 100 Bildern pro Sekunde zur Folge hat. Es wird angenommen, daß der Transistor 29

0038406

CW 2367.6 PP/MP

durchgesteuert und der Transistor 30 gesperrt ist. Dieser Leitzustand der beiden Transistoren 29 und 30 sei der Drehrichtung C des Motors 1 zugeordnet. Der Transistor 42 ist gesperrt, so daß der Widerstand 41 in Reihe zu den Widerständen 39 und 40 voll wirksam ist.

Es wird nun angenommen, daß die Marke 18a sich unmittelbar vor dem Strahlengang der ersten Abtastvorrichtung 10, 11, 12 befindet. Bei der Weiterbewegung der Markierung 18a in Pfeilrichtung D wird in der optoelektronischen Abtasteinrichtung 10 bis 12 ein Impuls erzeugt, der über die Impulsformerstufe 22 dem Zähler 24 zugeführt wird und diesen aus seinem Anfangszustand um einen Schritt weiterschaltet. Demzufolge weisen die Ausgänge A, B und C die Potentiale "1", "0" und "0" auf. Folglich tritt am Ausgang des ODER-Gatters 25 das Potential w gleich "1" auf. Auch am Ausgang des zweiten ODER-Gatters 26 wird das Potential gleich "1". Der Transistor 42 wird durchgesteuert und demzufolge der Widerstand 41 kurzgeschlossen. Die Spannung am invertierenden Eingang des Operationsverstärkers 34 springt schlagartig auf einen niedrigeren Wert. Dies hat zur Folge, daß die Drehzahl des Gleichstrommotors 1 um ein entsprechendes Maß verringert wird. Es wird angenommen, daß sie nach der Umschaltung den Wert von 48 Bildern pro Sekunde aufweist.

Bewegt sich nun der Film 3 weiter, so gelangt die zweite Markierung 17a in den Bereich der ersten optoelektronischen Abtasteinrichtung 10 bis 12 und veranlaßt die Weiterschaltung des Zählers 24 um einen Schritt. Die Ausgänge A, B und C des Zählers 24 weisen dann die Potentialverteilung "0", "1" und "0" auf. Das Potential "1" am Ausgang W des ODER-Gatters 25 bleibt erhalten. Gleiches gilt auch für den Schaltzustand des Transistors 42 sowie für die Drehzahl des Gleichstrommotors 1. Des weiteren gelangen nun nacheinander die Markierungen 16a, 15a, 14a und 13a in den Bereich der

CW 2367.6 PP/MP

optoelektronischen Abtasteinrichtung 10 bis 12 und veranlassen jeweils die Weiterschaltung des Zählers 24. Wie aus der Wahrheitstabelle gemäß Figur 2 ersichtlich ist, bleibt das Potential am Ausgang W des ODER-Gatters 25 gleich "1". Hat nun die Markierung 13a den ersten optoelektronischen Abtaster 10 bis 12 erreicht, so gelangt die erste Markierung 18a in den Bereich der zweiten Abtaststufe 19 bis 21 mit der Folgewirkung, daß über die Impulsformerstufe 23 ein Rückzählimpuls zum Zähler 24 gelangt.

Das Potential an den Ausgängen A, B und C weist die Werte "1", "0" und "1" auf. Das Potential "1" am Ausgang W des ODER-Gatters 25 bleibt erhalten.

Außerdem wird ein Steuerimpuls dem monostabilen Multivibrator 27 zugeführt, der für die Zeitspanne $T_0$ den elektronischen Schalter 28 sperrt. Der Motor 1 wird demzufolge stillgesetzt. Das der Markierung 18a zugeordnete Bild 4 befindet sich im Strahlengang der Projektionseinrichtung. Nach Verstreichen der Verzögerungszeit $T_0$ erhält der elektronische Schalter 28 wieder das Durchsteuerungspotential "1". Dieses Potential "1" wird außerdem der Verzögerungsstufe 44 zugeführt, welches um die Verzögerungszeit $T_v$ verzögert am Eingang des Inverters 43 auftritt. Das Potential am Eingang des zweiten ODER-Gatters 26 springt vom Wert "1" auf den Wert "0". Der Schaltzustand des Transistors 42 ändert sich jedoch hierdurch nicht. Der Transistor 42 bleibt durchgesteuert. Der Motor 1 läuft nach dem Verstreichen der Verzögerungszeit $T_0$ mit der verringerten Drehzahl weiter.

Die vorgenannten Vorgänge wiederholen sich beim Beeinflussen der zweiten optoelektronischen Abtasteinrichtung 19 bis 21 durch die folgenden Markierungen 17a, 16a, 15a und 14a.

0038406

CW 2367.6 PP/MP

Erreicht nun die sechste Markierung 13a die optoelektronische Abtasteinrichtung 19 bis 21, so wird der Zähler 24 in
seine Ausgangsstellung zurückgeschaltet, in der seine Ausgänge A bis C das Potential "0" aufweisen. Hierbei springt
das Potential am Ausgang W des ODER-Gatters 25 auf den Wert
"0". Der erste Eingang des ODER-Gatters 26 erhält demzufolge
Nullpotential.

Ist nun nach der Beeinflussung des monostabilen Multivibrators 27 durch den von der Markierung 13a verursachten Impuls
die Verzögerungszeit $T_0$ verstrichen und der zuvor gesperrte Schalter 28 wieder durchgesteuert, so erhält nach Verstreichen der Verzögerungszeit $T_v$ der zweite Eingang des
ODER-Gatters 26 das Potential "0". Während der Verzögerungszeit $T_v$ ist jedoch der zweite Eingang des ODER-Gatters 26
potentialmäßig auf "1" geschaltet, so daß der Motor 1 mit
verringerter Drehzahl betrieben wird. Erst nach dem Verstreichen der Verzögerungszeit $T_v$ wird der Transistor 42
gesperrt und demzufolge die hohe Drehzahl des Motors 1 eingeschaltet.

Beim Ausführungsbeispiel gemäß Figur 3 sind die den Teilen
gemäß Figur 2 entsprechenden Teile mit gleichen Bezugszeichen versehen. Zur Unterscheidung weisen sie jedoch Indizes auf.

Im Unterschied zum ersten Ausführungsbeispiel sind beim Ausführungsbeispiel gemäß Figur 3 anstelle des Widerstandes 41
drei Widerstände 45, 46 und 47 vorgesehen. Diese in Reihe
geschalteten Widerstände 45, 46, 47 sind durch jeweils einen
Schalttransistor 48, 49, 50 nacheinander kurzschließbar. Die
Basis des Transistors 48 ist direkt mit dem Ausgang des
ODER-Gatters 26' verbunden. Von der Basis des Transistors 49
führt über eine Verzögerungskippschaltung 51 eine Verbindung
zum Ausgang des ODER-Gatters 26'. Diese Verzögerungsschal-

CW 2367.6 PP/MP

tung 51 ist so ausgebildet, daß sie das jeweils am Eingang befindliche Potential nach einer Verzögerungszeit T1 zur Basis des Transistors 49 weiterleitet.

Zwischen dem Ausgang des ODER-Gatters 26' und der Basis des Transistors 50 ist eine Verzögerungskippstufe 52 vorgesehen, die das jeweils am Eingang befindliche Potential nach der Verzögerungszeit T2 zur Basis des Transistors 50 weiterleitet. Die Zeit T2 ist größer als die Zeit T1. Zweckmäßigerweise ist die Zeit T2 doppelt so lang wie die Zeit T1. Die Zeit T1 kann z. B. der Zeit entsprechen, die der Filmstreifen benötigt, um einen Bildschritt weiterbewegt zu werden.

Erreicht also die erste Markierung 18a den ersten optoelektronischen Wandler 10 bis 12, so wird der Transistor 48 durchgesteuert und die Drehzahl des Motors 1' sprunghaft verringert. Nach Verstreichen der Zeitspanne T1 wird der Transistor 49 durchgesteuert und der Widerstand 46 kurzgeschlossen. Demzufolge wird die Drehzahl des Motors 1' abermals sprunghaft verringert. Nach Verstreichen der Zeitspanne T2 wird der Transistor 50 durchgesteuert und der Widerstand 47 kurzgeschlossen. Abermals wird die Drehzahl des Motors 1' sprunghaft verringert.

Die Markierungen 18a und die folgenden Markierungen erreichen mit der stark verringerten Geschwindigkeit des Filmstreifens 3 die zweite optoelektronische Abtasteinrichtung 19 bis 21, um dann jeweils für die Zeitspanne $T_0$ stillgesetzt zu werden. Ist der Zähler 24' in seine Ausgangsstellung zurückgeschaltet worden, so bleiben zunächst während der Verzögerungszeit $T_v$ sämtliche Transistoren 48, 49 und 50 durchgesteuert, so daß auch nach der letzten Markierung der Filmstreifen mit verringerter Drehzahl betrieben wird. Nach Verstreichen der Verzögerungszeit $T_v$ wird zunächst der Transistor 48 gesperrt und damit der Widerstand

0038406

CW 2367.6 PP/MP

45 wirksam. Die Drehzahl des Motors 1' erhält sich sprunghaft um einen vorgegebenen Wert. Nach Verstreichen der Zeit
$T_1$ wird der Transistor 49 gesperrt und der Widerstand 46
wirksam, was eine abermalige sprunghafte Drehzahlerhöhung
bedeutet. Nach dem Verstreichen der Zeit T2 wird der Transistor 50 gesperrt und auch der Widerstand 47 sprunghaft
wirksam.

Bei beiden Ausführungsbeispielen bewegt sich der Filmstreifen 3 mit erhöhter Transportgeschwindigkeit in Pfeilrichtung
B so lange, bis eine weitere nicht dargestellte Markierung
in den Bereich der ersten optoelektronischen Abtasteinrichtung 10, 12 gelangt.

CAMERA-WERK MÜNCHEN
PATENTABTEILUNG

CW 2367.6 PP/MP

10-vf-ni

4626 A

## Ansprüche

1. Vorrichtung zur Steuerung von Filmstreifen mit auf diesem vorgesehenen Bildern, wobei bestimmten Bildern Markierungen auf dem Filmstreifen zugeordnet sind, durch die ein Antrieb für den Filmstreifen steuerbar ist, dadurch gekennzeichnet, daß zwei optoelektronische Abtaststufen (10 bis 12 und 19 bis 21) in einem vorgegebenen Bildabstand voneinander angeordnet sind, daß beide Abtaststufen mit je einer Steuer- und Auswerteschaltung (24, 27, 28) verbunden sind, von denen die erste Stufe (24, 25, 26, 42) den Antrieb (1) von einer hohen Drehzahl kontinuierlich oder in mindestens einer Stufe sprunghaft auf einen entsprechend niedrigeren Drehzahlwert verringert und von denen die zweite Stufe (27, 28) den Filmantrieb (1) für eine vorgegebene Zeitspanne $(T_0)$ stillsetzt und daß eine Erkennungsschaltung (24) vorgesehen ist, die eine Rückumschaltung der Drehzahl auf den hohen Drehzahlwert kontinuierlich oder stufenweise erst dann vornimmt, wenn bei einer an oder nach der zweiten Abtaststufe befindlichen Markierung sich zwischen dieser (19 bis 21) und der ersten Abtaststufe (10 bis 12) keine weitere Markierung befindet.

2. Vorrichtung nach Anspruch 1, dadurch gekennzeichnet, daß die erste Steuer- und Abtaststufe einen Vorwärts-Rückwärts-Zähler (24) aufweist, dessen Vorwärts-Zähleingang mit dem ersten optoelektronischen Abtaster (10 bis 12) und dessen Rückwärts-Zähleingang mit dem zweiten optoelektronischen Abtaster (19 bis 21) verbunden ist.

3. Vorrichtung nach Anspruch 2, dadurch gekennzeichnet, daß zwischen jedem der beiden optoelektronischen Abta- ster und dem Vorwärts-Rückwärts-Zähler (24) jeweils eine Impulswandlerstufe (22 und 23) vorgesehen ist.

4. Vorrichtung nach Anspruch 2 oder 3, dadurch gekennzeichnet, daß der Abstand zwischen den beiden optoelektronischen Abtastern einer Anzahl von mindestens sechs Bildern entspricht.

5. Vorrichtung nach Anspruch 4, dadurch gekennzeichnet, daß die Ausgänge des Zählers (A, B, C) mit einem ODER-Gatter (25) verbunden sind, dessen Ausgang an den Eingang einer elektronischen Schaltvorrichtung (42 bzw. 48 bis 50) angeschlossen ist, durch die der Stromkreis des Antriebsmotors (1) steuerbar ist.

6. Vorrichtung nach Anspruch 5, dadurch gekennzeichnet, daß durch die steuerbare elektronische Schaltvorrichtung, vorzugsweise durch mindestens einen Transistor mindestens ein Widerstand (41 bzw. 45, 46, 47) ein- und ausschaltbar ist, der mit weiteren Widerständen einen Spannungsteiler bildet, welcher als Sollwertgeber mit einer Vergleichsschaltung (34) verbunden ist, deren anderer
Eingang mit einem aus Widerständen (35, 36) und einem
mit dem Antriebsmotor (1) zusammenwirkenden Tachogenerator (37) bestehenden Istwertgeber verbunden ist und
daß der Ausgang der Vergleichsschaltung (34) an den Antriebsmotor-Stromkreis angeschlossen ist.

7.      Vorrichtung nach einem der vorhergehenden Ansprüche, dadurch gekennzeichnet, daß die zweite Steuer- und Aus-
        werteschaltung einen im Antriebsmotorstromkreis vorgese-
        henen steuerbaren Schalter (28) aufweist, der durch eine
        analoge oder digitale Zeitgliedstufe (27) für eine vor-
        gegebene Zeit ($T_0$) gesperrt wird und daß die Zeitgliedstufe durch einen Startimpuls wirksam geschaltet
        wird, der vom zweiten optoelektronischen Abta-
        ster (21, 23) abgeleitet wird.

8.      Vorrichtung nach Anspruch 7, dadurch gekennzeichnet, daß
        die Zeitgliedstufe ein monostabiler Multivibrator (27)
        oder ein Digitalzähler ist, der entweder nach einer
        lichtabhängigen oder nach einer voreinstellbaren Zeit in
        seinen Ausgangszustand zurückkehrt.

9.      Vorrichtung nach einem der vorhergehenden Ansprüche,
        dadurch gekennzeichnet, daß vom Ausgang der Zeitgliedstufe (27) eine Steuerverbindung zu einer Verzögerungs-
        stufe (44) vorgesehen ist, deren Ausgang mit dem zweiten
        Eingang eines zweiten ODER-Gatters (26) verbunden ist,
        dessen erster Eingang an den Ausgang des ersten
        ODER-Gatters (25) des Zählers (24) angeschlossen ist und
        daß der Ausgang des zweiten ODER-Gatters (26) mit der
        Basis mindestens eines Steuertransistors (42) verbunden
        ist.

10. Vorrichtung nach einem der vorhergehenden Ansprüche, dadurch gekennzeichnet, daß drei Steuertransistoren (42, 49, 50) vorgesehen sind, deren Kollektor-Emitter-Strecken in Reihe geschaltet sind und durch die nacheinander je ein Widerstand (45, 46, 47) der Vergleichsschaltung (34') ein- und ausschaltbar ist und daß im Basisstromkreis des zweiten und dritten Transistors (49 bzw. 50) eine Verzögerungsstufe (51 bzw. 52) vorgesehen ist.

Hierzu 3 Blatt Zeichnungen

CW 2367.6 PP/MP

Fig.1

0038406

0038406

2/3

Fig.2

CW 2367·6 PP/MP

Fig.3

| Nr | A | B | C | W |
|----|---|---|---|---|
| 0 | 0 | 0 | 0 | 0 |
| 1 | 1 | 0 | 0 | 1 |
| 2 | 0 | 1 | 0 | 1 |
| 3 | 1 | 1 | 0 | 1 |
| 4 | 0 | 1 | 1 | 1 |
| 5 | 0 | 0 | 1 | 1 |
| 6 | 0 | 1 | 1 | 1 |